# EUROPEAN PATENT SPECIFICATION

(11) **EP 4 485 115 B1**
(45) Date of publication and mention of the grant of the patent: **15.07.2026**
(21) Application number: 23182735.3
(22) Date of filing: 30.06.2023
(51) Int. Cl.: G05D 1/617, G05D 107/70, G05D 109/10, E02F 9/20

(54) **MONITORING A VOLUME OF AN UNDERGROUND WORK SITE**
ÜBERWACHUNG EINES VOLUMENS EINES UNTERIRDISCHEN ARBEITSPLATZES
SURVEILLANCE D'UN VOLUME D'UN SITE DE TRAVAIL SOUTERRAIN

(43) Date of publication of application: 01.01.2025
(73) Proprietor: Sandvik Mining and Construction Oy, 33330 Tampere (FI)
(72) Inventor: PUURA, Jussi, 33311 Tampere (FI); HUBEN, Malte, 33311 Tampere (FI)
(74) Representative: Sandvik

(56) References cited:
- EP-B1- 3 094 806
- WO-A1-2022/063903
- WO-A2-2011/051558
- AU-A4- 2012 100 392
- US-A1- 2016 001 701

## Description

### Field

The present application relates to monitoring a volume of an underground work site and using a device configured to obtain sensing data for the monitoring.

### Background

In underground work sites, such as mines, conditions may be challenging for executing the work. In addition, work machines used in underground work sites may be powerful and heavy and therefore their safe usage is important. Various measures may be taken to ensure that work in an underground work site can be carried out in a safe manner. Some of these measures may include using technology to that helps to enable safety.

Previous solutions are described in EP3094806B1, US2016/001701A1, WO2022/063903, AU201200392A4, US2020/175844A1 and WO2011/051558A2.

### Brief Description

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to a first aspect there is provided a monitoring system as defined in claim 1.

According to a second aspect there is provided a method as defined in claim 14.

In some example embodiments according to the second aspect, the method is a computer-implemented method.

According to a third aspect there is provided a computer program as defined in claim 15.

### List of Drawings

In the following, the invention will be described in greater detail with reference to the embodiments and the accompanying drawings, in which
FIG. 1 illustrates an example embodiment of an underground work site.
FIG. 2 illustrates a safety system that may be used within an underground work site.
FIG. 3 illustrates an example embodiment in which an underground work site has a safety system that comprises mobile passage control units.
FIG. 4 illustrates an example embodiment of an underground work site.
FIG. 5A and FIG. 5B illustrate flow charts according to example embodiments.
FIG. 5C illustrates a block diagram according to an example embodiment.
FIG. 6 illustrates an example embodiment of an apparatus.

### Description of Embodiments

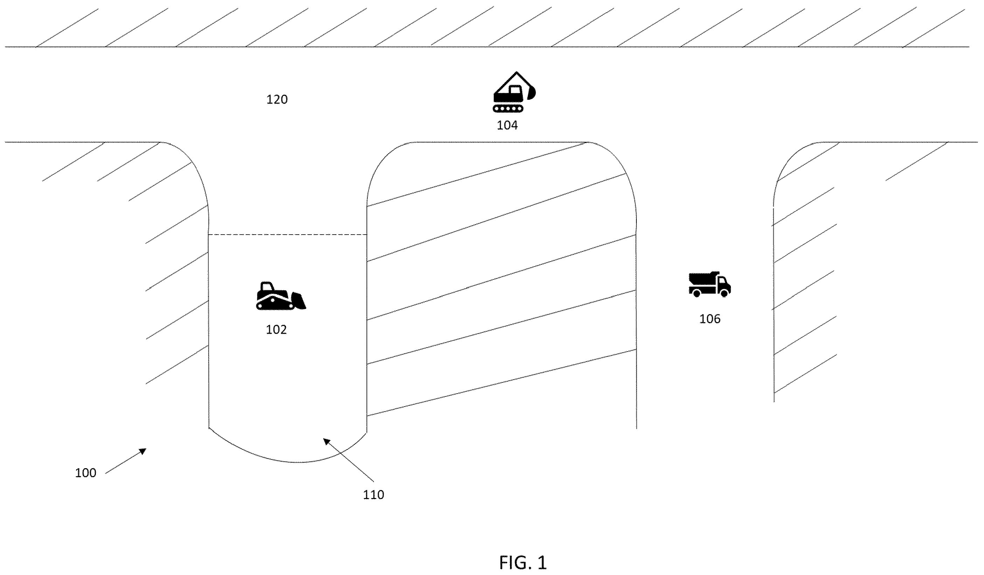

FIG. 1 illustrates an example embodiment of an underground work site 100. A work site may be understood as an area within which industrial operations may be performed. It is to be noted that a work site may also be understood as an operating site. An example of an underground work site 100 is a mine which comprises various tunnels and the walls of the tunnels are at least partly limited by rocks. When compared to a work site such as a factory or a terminal for handling cargo, an underground work site, such as the underground work site 100, differs in that it may not be as stable as an environment as a work site such as a factory or a terminal. In an underground work site, the environment may be changing due to tunnels being established as well as due to other work being performed. For example, in an underground work site due to work, such as drilling, being performed, there may be obstacles, such as rocks, appearing and causing a significant change to the environment. Also, the tunnels may change as a result of the work being performed.

Therefore, when comparing for example a mine and a factory, the mine may be considered as a less stable environment than the factory.

As the underground work site 100 is an area for industrial operations, there may be work machines, such as mining vehicles 102, 104, 106 used for industrial operations, operating within the underground work site 100. The mining vehicles 102, 104, 106 may be mobile meaning that the mining vehicles may be configured to move within the operating site 100. In some example embodiments, at least some of the mining vehicles 102, 104 and 106 may be partially or fully automated mining vehicles that are capable of performing operations autonomously without, or with limited, control from a user, that may be a person working in the underground work site 100. For example, the person may work in a remote location, such as a monitoring room, of the underground work site 100, and thus be capable of controlling the automated, or partially automated, mining vehicle remotely. An automated mining vehicle may be configured to autonomously perform one or more tasks. It is to be noted that the one or more tasks may be comprised in an operation that can be performed by a work machine such as a mining vehicle and as such, a work machine, when operating, may perform one or more tasks. An automated mining vehicle operating in an automatic mode may be configured to, for example, receive a task to be performed, perceive the environment of the mining vehicle, as the mining vehicle is a mobile mining vehicle, and autonomously perform the task while taking the environment into account. It is to be noted though that for example due to safety aspects, an automated, or partially automated mining vehicle configured to operate independently may be taken into control by an external entity at any time. The external entity may be for example a user or a safety system or any other suitable external entity. Examples of mining vehicles such as the mining vehicles 102, 104 and 106, comprise trucks, bulldozers, dumpers, vans, rock drilling or milling rigs, gantry cranes, mobile reinforcement machines, mechanical cutting machines and loaders, or any other kind of work machines suitable for performing an operation within the underground work site 100.

The underground work site 100 may be divided into different areas such as areas 110 and 120, which may also be understood as operation zones within the underground work site 100. By dividing the underground work site 100 into smaller areas, there may be an advantage that some operations may be limited to certain area and/or access may be limited to some parts of the underground work site 100. For example, the area 110 may be reserved for automated mining vehicles such that manually operated mining vehicles and/or personnel is not allowed to enter the area 110 unless operations performed by the autonomous mining vehicles are stopped. Thus, the area 110 may be called as an isolated working area, or a safety area, or an isolated safety area. It is to be noted though that an area may be isolated such that it is an isolated safety area for any other suitable reason as well. An isolated safety area may be reserved for at least one mining vehicle, that is a mobile mining vehicle, operating in a particular mode of operation. A mode of operation may comprise, for example, an automatic mode comprising autonomous operation of the automated mining vehicle or manual mode comprising manual operation of the mining vehicle. An isolated safety area may, therefore, be reserved for one or more automated mining vehicles or one or more manually operated mining vehicles. Reserving an area, within the underground work site 100, may comprise providing restricted access to the area by one or more passage control units.

Additionally, or alternatively, in some example embodiments, there may also be areas within an underground work site to which access is restricted although the area is not isolated as such. The restrictions made to entering an area, for whatever reason, may be permanent or they may be temporary.

An isolated safety area may be isolated using one or more passage control units that comprise a mechanism configured to perform passage control. A passage control unit may comprise a physical access barrier for restricting access by work machines, such as mining vehicles, to the isolated safety area and preventing unauthorized personnel from entering the isolated safety area when one or more mobile mining vehicles are operating within the isolated safety area. For example, a passage control unit may comprise an access barrier such as a gate. A passage control unit may comprise, for example, an electronic access barrier. Alternatively, in some other example embodiments, any other suitable passage control mechanism may be utilized in a passage control unit. A passage control unit may further comprise at least one sensing device for detecting people and/or mining vehicles entering and/or exiting the isolated working area. A sensing device, which may also be understood as a detection device, may comprise, for example, a light curtain, or some other suitable detection device. One or more passage control units may be comprised in, or connected to, a safety system that is configured to monitor safety of the isolated safety area 110. Further, the one or more passage control units may be operatively coupled to a system that is configured to monitor the underground work site 100 as a whole. The system may be configured to communicate with one or more communication units located within the underground work site 100. A communication unit may comprise, for example, a communication unit included in a mining vehicle, a communication unit included in a cap lamp of a person, or a communication unit included in a structure such as a communication unit included in a passage control unit. Communicating with one or more communication units may comprise receiving information from and/or sending information to the one or more communication units. For example, the system may be configured to receive data from the operating site 100 as well as from mining vehicles, user etc. The system may also be configured to provide data and/or instructions to mining vehicles within the underground work site 100. The system may additionally, or alternatively, be configured to receive a user input from a person such as a person monitoring the operations within the underground work site 100.

According to an example embodiment, a passage control unit may be, or may comprise, a sensing device such as an optoelectronic guard detector, such as a guard detector based on the use of a light curtain or photocells. Alternatively, other kind of devices such as laser scanning devices, devices providing three-dimensional (3D) sensing data and safety mats, may be utilized to detect movement of a mobile object. Three-dimensional sensing data may be provided by using a sensing device such as a multi-layer lidar, a three-dimensional radar, a four-dimensional radar or ultrasonic sensing. A passage control unit may, in some example embodiments, be configured to detect the direction of motion of the mobile object. For example, the passage control unit may be configured to detect if the mobile object is entering or exiting the isolated safety area.

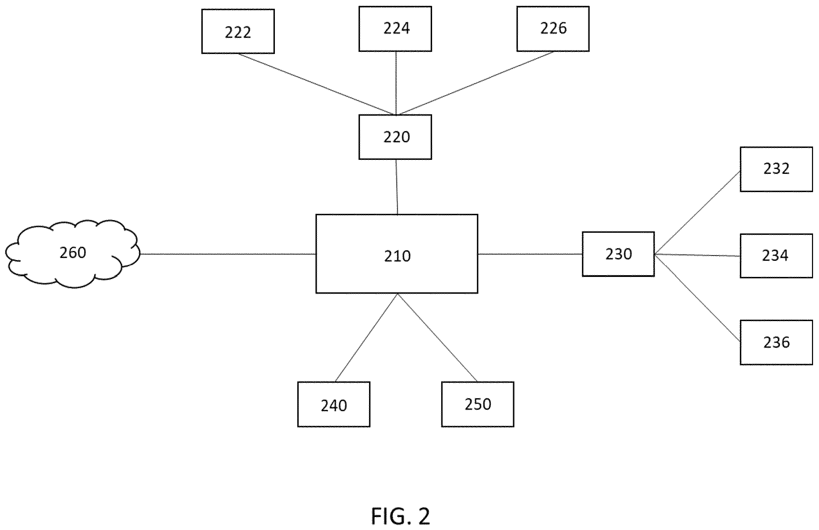

FIG. 2 illustrates a safety system that may be used within an underground work site such as the underground work site 100 of the example embodiment illustrated in FIG. 1. The safety system may be used for example with an isolated safety area such as area 110 illustrated in the example embodiment of FIG. 1. The safety system in this example embodiment comprises a control unit 210, which may be understood as a logical unit that comprises at least one controller. The control unit 210 is connected to functional units 220-250. It is to be noted that in some other example embodiments there may be different number of functional units the control unit 210 is connected to. The functional units 222, 224, 226, 232, 234, and 236 in this example embodiment are passage control units such as electronic access barriers. These functional units may be configured to detect movement to or from an isolated safety area. The movement may be caused for example by a mobile object such as a person, by a mining vehicle or any other mobile object. Additionally, or alternatively, the movement may be caused by a falling rock for example. The movement of the mobile object may be detected based on any suitable technology, for example, by a light curtain having one or more laser transmitters transmitting a laser beam across the passage-controlled part of the underground work site, based on visual information and/or based on 3D sensing data. The safety system is configured to receive an indication that may be interpreted, by the control unit 210 to indicate movement to or from an isolated safety area. The control unit 210 is configured to then determine a corresponding action. For example, the control unit 210 may be configured to send an indication to one or more mining vehicles within the operating site requesting them to perform a safety operation such as stopping and preventing movement of the mining vehicle. Further, the control unit 210 may be connected over any suitable network 260 to other devices and may also be configured to provide an indication of the detected movement to one or more other devices using the network 260. Additionally, the safety system may further comprise functional units that comprise identification units 230, 220. The identification units 220, 230 may be configured to identify the mobile object entering or exiting the isolated working area.

In this example embodiment, the safety system further comprises functional units 240 and 250 that comprise indication units. An indication unit may be comprised in a passage control unit in some other example embodiments. The indication units 240 and 250 may be configured to indicate further control information for the mobile object to enter into or exit from the isolated working area.

The safety system illustrated in this example embodiment may further comprise communication links between the functional units. A communication link may be established as a unidirectional or bidirectional communication link. The communication links may be based on any suitable technology. For example, the communication link may be based on a wireless local area networking, such as IEEE 802.11 or 802.16 based communications is applied.

The safety system of this example embodiment may also be connected to a control unit that is comprised in a mining vehicle located in the isolated working area. Thus, centralized safety control may be applied within the isolated working area. In some example embodiments, it may be a pre-requisite for a mining vehicle to enter into the isolated working area that it is connected to the safety system. For example, the safety system may be configured to transmit the indication for a safety operation to be performed to the mining vehicle located in the isolated safety area.

In an underground work site, as the work progresses, the production area may change and/or move due to the work performed. This may cause a need for changing an isolated safety area. Consequently, also the safety system, that comprises a plurality of passage control units may need to be changed. This may require a considerable amount of work when the passage control units are fixed to their location. For example, a light curtain pairs may need to be installed to walls and power, as well as a wired network connectivity, may need to be installed. After this the configuration of the safety system as a whole needs to be updated. The updating may comprise matching the physical setup to the configuration of the safety system. This may require that careful performing of the updating as when the configuration is made by humans and the safety system is at least partly placed differently and the placing is done manually, the updating may be prone to errors. Yet, there should be confidence that when an area within the underground work site is isolated, it is indeed properly and correctly isolated.

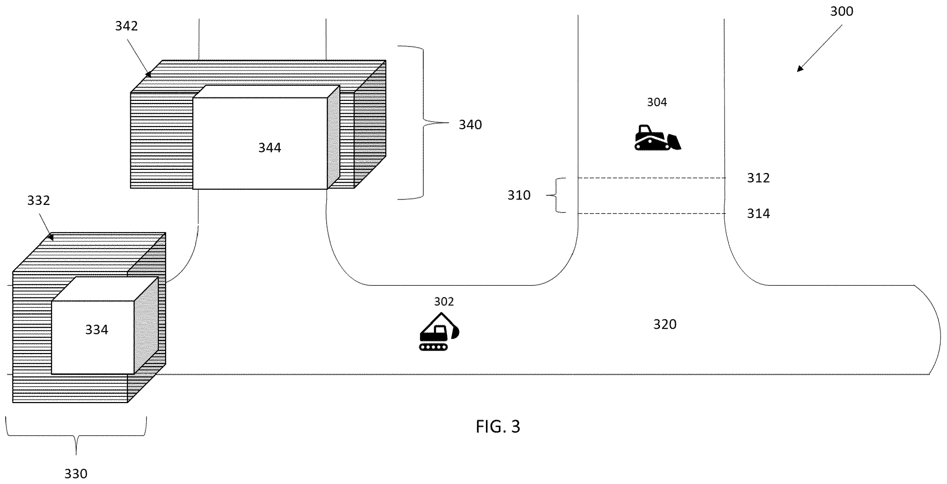

FIG. 3 illustrates an example embodiment in which an underground work site 300 has a safety system that comprises two passage control units 330 and 340 that are mobile in a sense that they are not fixed to their location but can easily be picked up and moved elsewhere if needed. Thus, the passage control units 330 and 340 may be understood as mobile passage control units. In this example embodiment, a tunnel 320 of the underground work site 300 is to be isolated. There is a mining vehicle 302 operating within the tunnel 320 and a mining vehicle 304 operating outside of the tunnel 320. The mining vehicle 304 is configured not to enter the tunnel 320 and there is a light curtain 310, which is also a passage control unit comprised in the safety system, to monitor for that. In this example embodiment, the light curtain is a passage control unit that comprises two separate elements, the element 312 and 314, that are placed at a distance between each other to create a space between the tunnel and an object approaching it. For example, if a person was to proceed towards the tunnel 320, the element 312 and the element 314 create a safety measure by providing a space between the tunnel and the person approaching it thus making it safer to either enter the space or react to the person approaching the tunnel in case the person should not enter the tunnel 320. The elements 312 and 314 may be any suitable elements, for example they may be lights curtains, a light curtain and a rope switch, etc.

The mobile passage control units 330 and 340 are connected to the same safety system as the light curtain 310. In this example embodiment, the mobile passage control units 330 and 340 thus are a part of the safety system and may be configured to connect to the safety system wirelessly using any suitable wireless communication. In this example embodiment, the mobile passage control units 330 and 340 are configured to have a constant communication to the system. The constant communication may be understood as sending data to the safety system continuously or at pre-determined time intervals. The safety system may be configured to indicate if the continuous communication is disturbed so that it can be checked if there is a problem with at least one of the mobile passage control units 330 or 340, and/or the safety system may be configured to stop a mining vehicle 302 operating in the tunnel 320.

In general, a mobile passage control unit such as mobile passage control unit 330 or 340 can be considered as a detection device that covers and monitors a three-dimensional space that may be understood as a volume. The mobile passage control unit may be configured to sense, using a sensing device it comprises or is connected to, the volume using, for example, a multi-layer lidar, three-dimensional radar, a four-dimensional radar, or ultrasonic sensing. The mobile passage control unit is configured to provide three-dimensional data regarding the volume it is capable of detecting using its sensor(s), in other words, using sensing. Thus, the three-dimensional data may be understood as three-dimensional sensing data. The three-dimensional sensing data may be in any suitable format, it may be for example a point cloud. It is to be noted that three-dimensional sensing data may be represented using data frames and one data frame may comprise data points representative of distances from the sensing device to surrounding objects such as tunnel walls, obstacles, vehicles, or pedestrians at a particular time instance.

The sensing device may be able to sense a volume over a distance that is called a sensing distance and it may be, for example, up to 100 meters. This allows monitoring without having two separate elements as is the case with a passage control unit such as the light curtain 310. A volume the mobile passage control unit is configured to monitor, based on the sensing performed by the sensing device, may comprise a monitoring volume defined by a monitoring distance that is less than the sensing distance. The monitoring distance may be for example 10 to 50 meters. The monitoring distance may be determined by a user of the mobile passage control unit for example.

Using a mobile passage control unit that is able to sense a volume allows to monitor a three-dimensional space that may have any shape. As the monitoring distance can be defined up to the distance of the sensing distance, it allows to define an arbitrary three-dimensional space to be monitored. Further, in case a mobile passage control unit is placed at an intersection, such as an intersection of tunnels, it may allow monitoring in multiple directions using one passage control unit. The monitoring distance may be understood as a distance within an area monitored by the mobile passage control unit. The area may thus be called as monitored area. The monitored area may be defined, for example, as a radius or as cartesian distances to specific directions from the mobile passage control unit. It may also be determined as an arbitrary polygon shape. In some example embodiments, any detections outside the monitored area may be considered to be merely for information and may thus be excluded from monitoring that is for the purpose of safety.

In this example embodiment, the mobile passage control unit 330 has a sensing distance 332 and a monitoring distance 334. The mobile passage control unit 340 has a sensing distance of 342 and a monitoring distance 344.

The volume monitored by a passage control unit such as passage control unit 330 or 340 may be defined using voxels. A voxel is a unit representative of a predefined volume of three-dimensional space. A voxel may comprise, for example, a cube. A part of the monitoring volume, which may be referred to as a sub-volume, may be defined using voxels. A group of voxels may be used to define a sub-volume of the monitored volume. A sub-volume may be an occupied sub-volume or an unoccupied sub-volume. An occupied sub-volume comprises at least one occupied voxel while an unoccupied sub-volume is substantially free from occupied voxels. An occupied voxel comprises a voxel associated with sensing data indicative of an object. In case the object moves, it causes a change to the group of voxels that represent the sub-volume and thus, the movement may be detected. Correspondingly, in case a sub-volume is unoccupied, which may be understood as no unintended objects are present in the sub-volume, changes to the voxels representing that sub-volume may be understood as being indicative of movement of an object, and the sub-volume becomes occupied. This may be understood as a change event that may be indicative of a movement.

In order to avoid false positives, a further criterion may be applied before determining that the change event has occurred. For example, the change event is to be detected for a pre-determined threshold period that may be defined as time, or for example requiring that the change event is detected for three or five consecutive measurements performed by the sensing device. Additionally, or alternatively, the change event may be associated with a criterion that the change event detected in the sub-volume corresponds to a change event detected in an adjacent sub-volume as well.

A mobile passage control unit may be configured to monitor changes in one or more sub-volumes that are unoccupied. In this way it is possible to adapt to changes in an environment rather easily. Also, the monitoring may be set to detect for changes greater than a pre-determined threshold. A benefit of doing so is that the mobile passage control system becomes resistant to rain, dust or any falling or flying rocks. Instead, the mobile passage control system may be configured to indicate a change event when there is a change event corresponding to for example a person or a vehicle.

In this example embodiment, the mobile passage control units 330 and 340 together with the passage control unit 310 form a group of passage control units that isolate the area 320. This group, along with the safety system, may be comprised in a monitoring system. The mobile passage control unit 330 is configured to monitor at least one sub-volume within the volume defined by the monitoring distance 334, and the mobile passage control unit 340 is configured to monitor at least one sub-volume within the volume defined by the monitoring distance 344. If either of them detects a change event and at least one criterion relating to the change event is fulfilled, it may be determined that an object has been moving in the monitored volume. This determination may then be indicated to the safety system as well. For example, three-dimensional sensing data obtained from the sensing device may be determined as indicative of an object. Additionally, other data regarding the object may be provided to the safety system. The other data may be for example image-based data such as video feed or one or more images. Thus, information may be provided to the safety system. Additionally, or alternatively, the mobile passage control unit 330, or 340, may be configured to compare one or more data frames and determine that the object is moving within the volume, for example such that the object is approaching the isolated area 320.

It is to be noted that in some example embodiments, a mobile passage control unit may be configured to monitor an additional volume outside the volume that is monitored. For example, the mobile passage control unit may be configured to monitor an additional volume extending for example about 5 meters beyond the monitored volume and in case movement is detected in the additional volume, the mobile passage control unit may cause an output to be provided. The output may be in any suitable format, for example a visual output or an audio output or a combination of both. The output may be used to warn that if the movement continues, there is an alarm caused to the safety system, which may then for example stop operations in the area which is isolated using the mobile passage control unit. Thus, this way it may be possible to prevent accidental alarms being caused as the monitored volume may not be visible.

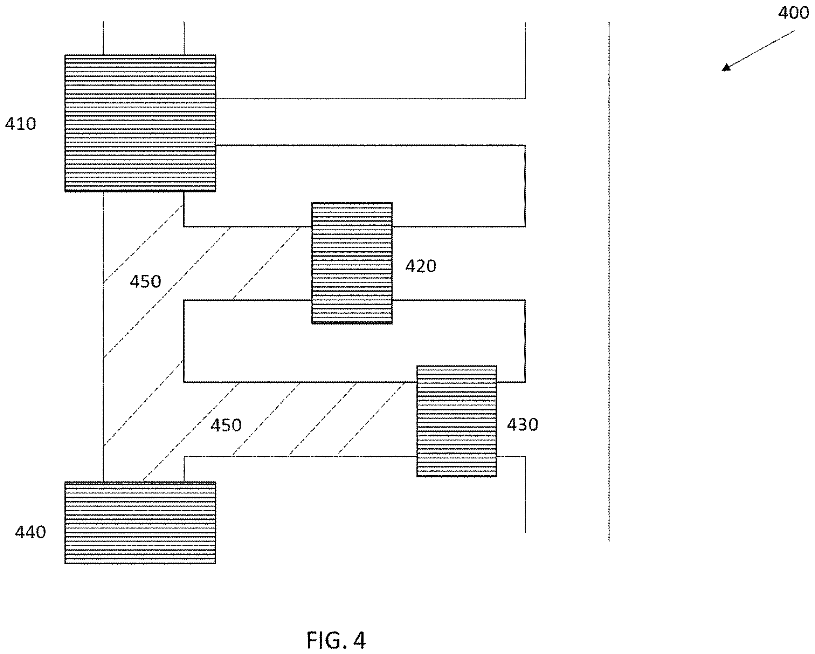

FIG. 4 illustrates an example embodiment of an underground work site 400. In this example embodiment, the underground work site is a mine, but it could be a construction site for building tunnels or any other suitable underground work site as well. According to the claimed invention, there is an isolated safety area 450 within the underground work site 400. The isolated safety area 450 is isolated using mobile passage control units 410, 420, 430 and 440.

For the isolated area 450 to be successfully isolated, the mobile passage control units 410, 420, 430 and 440 should be located in correct positions and activated. As the mobile passage control units 410, 420, 430 and 440 can be moved and set up manually in any location, there is a need to update their location and monitored volume such that there is a knowledge where in the underground work site 400 each mobile passage control unit is located.

As a mobile passage control unit, such as the mobile passage control unit 410, 420, 430 or 440, is configured to sense three-dimensional data, it is capable of measuring the actual geometry of its surrounding environment, such as a tunnel. The mobile passage control unit may be comprised in a monitoring system along with a positioning unit. The positioning unit may be understood as a logical unit that is provided using for example a server such as a data management server. The mobile passage control unit may be configured to provide the sensing data to the positioning unit, or, alternatively, the positioning unit may be configured to obtain the sensed data in any other suitable manner.

The positioning unit may comprise a model of the underground work site 400. This model may comprise three-dimensional reference data to which the sensing data relating to the monitored volume may be compared. Based on this comparison, a position of the mobile passage control unit may be determined. Determining the position may comprise determining location and orientation of the mobile passage control unit. It is to be noted that the three-dimensional reference data may be associated with a coordinate frame of the underground work site. In other words, as the positioning unit comprises a model of the underground work site 400, the positioning unit is configured to match the received sensing data relating to the monitored volume to the model and determine the xyz-location and orientation of a mobile passage control unit based on the obtained sensing data in relation to the underground work site 400. It is to be noted that the sensing data relating to the monitored volume may comprise the monitored volume as well as additional volumes within the sensed volume.

The positioning unit may be configured to determine the position of the mobile passage control unit based on the three-dimensional sensing data and the three-dimensional reference data. The positioning unit may further be configured to provide information on the position of the mobile passage control unit to the mobile passage control unit, the information on the position comprising a location and orientation of the mobile passage control unit. Additionally, the positioning unit may be configured to update the model such that it comprises indication of the mobile passage control unit and its location. The model may further be updated to indicate the volume monitored by the mobile positioning unit and/or whether the mobile passage control unit is activated or not.

The mobile passage control unit is configured to detect a triggering event for determining a position of a mobile passage control unit in the underground work site 400. The mobile passage control unit may be configured to obtain the three-dimensional sensing data relating to the monitored volume by the sensing device as a response to detecting the triggering event. The triggering event may comprise an instruction-based triggering event or a data-based triggering event. The triggering event may comprise, for example, at least one of the following: receiving a user input, detecting a change in the three-dimensional sensing data that is greater than a pre-determined threshold change, or receiving a command to obtain the three-dimensional sensing data. Thus, when the mobile passage control unit is activated, it may be determined as causing a triggering event. Additionally, or alternatively, the triggering event may be caused for example by providing a command or when then mobile passage control unit senses data indicative of a change that is interpreted as a change that causes a need to check the position of the mobile passage control unit. Optionally, the mobile passage control unit may be configured to receive a request to verify the location determined by the positioning unit for the mobile passage control unit.

Optionally, the monitoring system may also comprise one or more of the following: one or more additional mobile passage control units, a user interface, or safety system. As each mobile passage control unit comprised in the monitoring system may define a part of an isolated safety area, the user interface may be configured to illustrate, for example visually, successfully isolated one or more safety areas within the underground work site. The positioning unit may be configured to determine the part of an isolated safety area defined by an individual mobile passage control unit. The safety system may be the safety system of the underground work site and it may be comprised in the monitoring system, or the monitoring system may be connected to the safety system.

In the example embodiment of FIG. 4, the monitoring system comprises the mobile passage control units 410, 420, 430 and 440. When activated, these mobile passage control units isolate a safety area 450 within the underground work site 400. As the positioning unit comprised in the monitoring system is aware of the status and location of the mobile passage control units 410, 420, 430 and 440, it is able to illustrate on the model to indicate the area 450 as a successfully isolated safety area based on the status of the mobile passage control units 410, 420, 430 and 440. Thus, the positioning unit may be configured to provide information, which may comprise, for example, visual information, indicating the area 450 as a successfully isolated safety are within the work site 400. It is also to be noted that the activation of the safety area 450 may be performed by a person who checks the area 450 and then remotely activates a mobile passage control unit outside of its the monitoring volume. It is to be noted that the activation of the safety area 450 may be understood as the isolation of the area becoming operational. Indications such as light and/or sound may be used to indicate that the person is outside of the area 450. This may have a benefit of enabling determining a successfully isolated safety area in an easy manner.

As mobile passage control units, such as those described above, may be configured to communicate with a positioning unit such as described above, the mobile passage control units may be considered to be capable of determining their location. This may be beneficial as it may make localization of one or more mobile passage control units easier. According to the claimed invention, the one or more mobile passage control units inform their position to other entities capable of communicating with the one or more mobile passage control units.

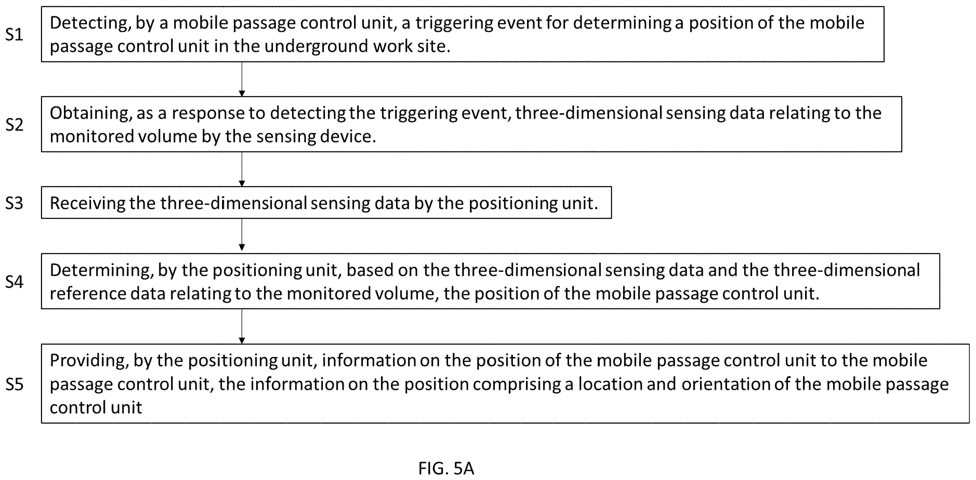

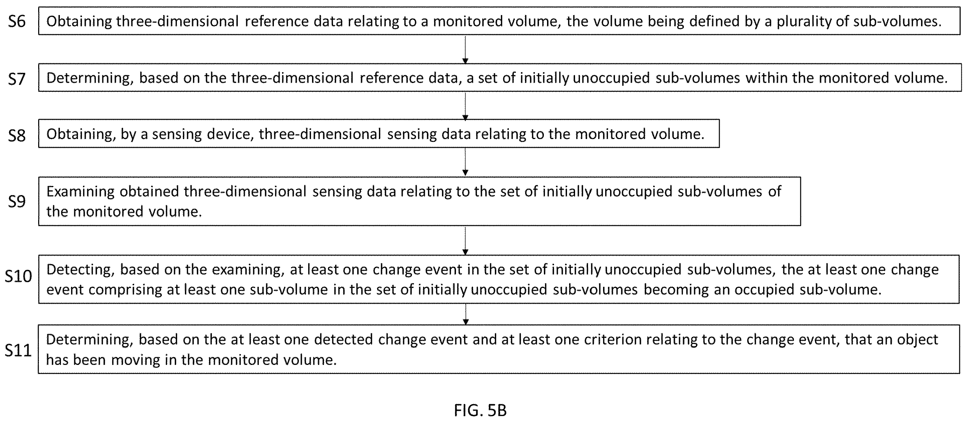

FIG. 5A illustrates a flow chart according to an example embodiment. In this example embodiment, the flow chart illustrates a method for a monitoring system that is configured to monitor a volume of an underground work site. The monitoring system comprises a positioning unit configured to store three-dimensional reference data relating to the monitored volume and at least one mobile passage control unit comprising a sensing device configured to provide three-dimensional sensing data relating to the monitored volume. First, in block S1 of the flow chart, the method comprises detecting, by a mobile passage control unit, a triggering event for determining a position of the mobile passage control unit in the underground work site. Then in block S2 the method comprises obtaining, as a response to detecting the triggering event, three-dimensional sensing data relating to the monitored volume by the sensing device. After this in block S3, the method comprises receiving the three-dimensional sensing data by the positioning unit. In block S4, the method comprises determining, by the positioning unit, based on the three-dimensional sensing data and the three-dimensional reference data relating to the monitored volume, the position of the mobile passage control unit. Then in block S5 the method comprises providing, by the positioning unit, information on the position of the mobile passage control unit to the mobile passage control unit, the information on the position comprising a location and orientation of the mobile passage control unit. FIG. 5B illustrates another flow chart according to an example embodiment. In this example embodiment, the flow chart illustrates a method for a mobile passage control unit that is suitable for monitoring a volume of an underground work site, the mobile passage control unit comprising a sensing device configured to provide three-dimensional sensing data relating to the volume. In this example embodiment, in block S6, the method comprises obtaining three-dimensional reference data relating to the monitored volume, the volume being defined by a plurality of sub-volumes. In block S7 the method comprises determining, based on the three-dimensional reference data, a set of initially unoccupied sub-volumes within the monitored volume. Then, in block S8, the method comprises obtaining, by the sensing device, three-dimensional sensing data relating to the monitored volume. In block S9 the example embodiment comprises examining obtained three-dimensional sensing data relating to the set of initially unoccupied sub-volumes of the monitored volume. In block S10 the example embodiment comprises detecting, based on the examining, at least one change event in the set of initially unoccupied sub-volumes, the at least one change event comprising at least one sub-volume in the set of initially unoccupied sub-volumes becoming an occupied sub-volume. In block S11 the example embodiment comprises determining, based on the at least one detected change event and at least one criterion relating to the change event, that an object has been moving in the monitored volume.

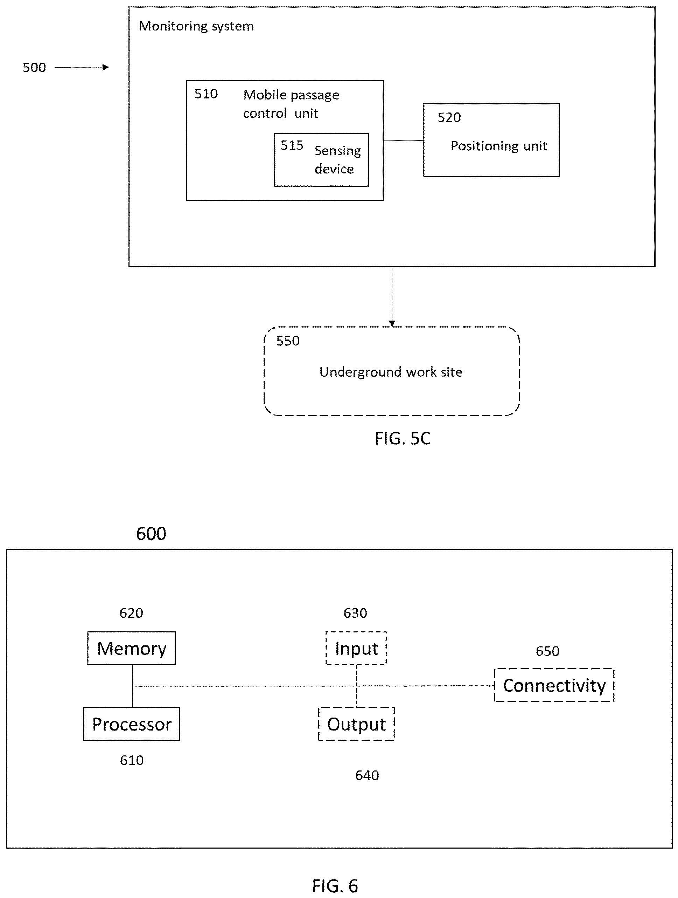

FIG. 5C illustrates a block diagram according to an example embodiment. The units in the block diagram may be understood as logical units the implementation of which may vary in different implementations. The implementation may comprise hardware, software or a combination of both. In this example embodiment, the block diagram illustrates a monitoring system 500 for monitoring an underground work site 550. It is to be noted that the underground work site is a target for the monitoring system 500 and therefore may not be completely part of the monitoring system 500 although some elements comprised in the underground working area 550 may in some example embodiments be comprised in the monitoring system 500. In this example embodiment the monitoring system 500 comprises a positioning unit 520 configured to store three-dimensional reference data relating to the monitored volume. The monitoring system 510 also comprises, in this example embodiment, at least one mobile passage control unit 510 comprising a sensing device 515 configured to provide three-dimensional sensing data relating to the monitored volume. In this example embodiment the monitoring system 500 is configured to detect, by the mobile passage control unit 510, a triggering event for determining a position of the mobile passage control unit 510 in the underground work site. The monitoring system 500 is also configured to obtain, as a response to detecting the triggering event, three-dimensional sensing data relating to the monitored volume by the sensing device 515. The monitoring system 500 is also configured to receive the three-dimensional sensing data by the positioning unit 520. The monitoring system 500 is also configured to determine, by the positioning unit 520, based on the three-dimensional sensing data and the three-dimensional reference data relating to the monitored volume, the position of the mobile passage control unit 510, and provide, by the positioning unit 520, information on the position of the mobile passage control unit 510 to the mobile passage control unit 510, the information on the position comprising a location and orientation of the mobile passage control unit 510.

FIG. 6 illustrates an example embodiment of an apparatus 600, which may be an apparatus comprised in another device such as a control unit comprised in a monitoring system, in a mobile passage control unit or in a positioning unit. The apparatus 600 comprises a processor 610. The processor 610 is configured to interpret computer program instructions and process data. The processor 610 may comprise one or more programmable processors. The processor 610 may comprise programmable hardware with embedded firmware and may, alternatively or additionally, comprise one or more application specific integrated circuits, ASICs.

The processor 610 is coupled to a memory 620. The processor is configured to read and write data to and from the memory 620. The memory 620 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 620 stores computer readable instructions that are execute by the processor 610. For example, non-volatile memory stores the computer readable instructions and the processor 610 executes the instructions using volatile memory for temporary storage of data and/or instructions.

The computer readable instructions may have been pre-stored to the memory 620 or, alternatively or additionally, they may be received, by the apparatus, via electromagnetic carrier signal and/or may be copied from a physical entity such as computer program product. Execution of the computer readable instructions causes the apparatus 600 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

In an example embodiment, the apparatus is comprised in a mobile passage control unit. The mobile passage control unit in this example embodiment is a mobile passage control unit for monitoring a volume of an underground work site, the mobile passage control unit comprising a sensing device configured to provide three-dimensional sensing data relating to the volume, the mobile passage control unit further comprising at least one processor, and at least one memory including a computer program code, wherein the at least one memory and the computer program code are configured, with the at least one processor, to cause the mobile passage control unit to obtain three-dimensional reference data relating to the monitored volume, the volume being defined by a plurality of sub-volumes. The at least one memory and the computer program code are also configured, with the at least one processor, to cause the mobile passage control unit to determine, based on the three-dimensional reference data, a set of initially unoccupied sub-volumes within the monitored volume. The at least one memory and the computer program code are also configured, with the at least one processor, to cause the mobile passage control unit to obtain, by the sensing device, three-dimensional sensing data relating to the monitored volume. The at least one memory and the computer program code are configured, with the at least one processor, to cause the mobile passage control unit to examine obtained three-dimensional sensing data relating to the set of initially unoccupied sub-volumes of the monitored volume. The at least one memory and the computer program code are also configured, with the at least one processor, to cause the mobile passage control unit to detect, based on the examining, at least one change event in the set of initially unoccupied sub-volumes, the at least one change event comprising at least one sub-volume in the set of initially unoccupied sub-volumes becoming an occupied sub-volume. The at least one memory and the computer program code are also configured, with the at least one processor, to cause the mobile passage control unit to determine, based on the at least one detected change event and at least one criterion relating to the change event, that an object has been moving in the monitored volume.

In an example embodiment, the apparatus is comprised in a mobile passage control unit. The mobile passage control unit in this example embodiment is a mobile passage control unit for monitoring a volume of an underground work site, the mobile passage control unit comprising a sensing device configured to provide three-dimensional sensing data relating to the volume, the mobile passage control unit further comprising at least one processor, and at least one memory including a computer program code, wherein the at least one memory and the computer program code are configured, with the at least one processor, to cause the mobile passage control unit to detect, by a mobile passage control unit, a triggering event for determining a position of the mobile passage control unit in the underground work site. The at least one memory and the computer program code are also configured, with the at least one processor, to cause the mobile passage control unit to obtain, as a response to detecting the triggering event, three-dimensional sensing data relating to the monitored volume by the sensing device. The at least one memory and the computer program code are also configured, with the at least one processor, to cause the mobile passage control unit to provide the three-dimensional sensing data to a positioning unit. The at least one memory and the computer program code are also configured, with the at least one processor, to cause the mobile passage control unit to receive, from the positioning unit, information on the position of the mobile passage control unit to the mobile passage control unit, the information on the position comprising a location and orientation of the mobile passage control unit.

The apparatus 600 optionally further comprises, or is connected to, an input unit 630. The input unit 630 comprises one or more interfaces for receiving input such as a user input or input from another device. The one or more interfaces may comprise for example one or more motion and/or orientation sensors, one or more cameras, one or more accelerometers, one or more microphones, one or more buttons and one or more touch detection units. Further, the input unit 630 may comprise an interface to which external devices may connect to.

The apparatus 600 also comprises, optionally, an output unit 640. The output unit comprises or is connected to one or more displays capable of rendering visual content. The output unit 640 may further comprise one or more audio outputs. The one or more audio outputs may be for example loudspeakers or a set of headphones.

The apparatus 600 may further comprise, optionally, a connectivity unit 650. The connectivity unit 650 enables wired and/or wireless connectivity to external networks. The connectivity unit 650 may comprise one or more antennas and one or more receivers that may be integrated to the apparatus 600 or the apparatus 600 may be connected to. The connectivity unit 650 may comprise an integrated circuit or a set of integrated circuits that provide the wireless communication capability for the apparatus 600. Alternatively, the wireless connectivity may be a hardwired application specific integrated circuit, ASIC.

It is to be noted that the apparatus 600 may further comprise various components not illustrated in the FIG. 6. The various components may be hardware components and/or software components.

## Claims

1. A monitoring system (500) for monitoring a volume of an underground work site (100, 300, 400, 550) comprising an isolated safety area (450), the monitoring system (500) comprising a positioning unit (520) configured to store three-dimensional reference data relating to the monitored volume and at least one mobile passage control unit (222, 224, 226, 232, 234, 236, 410, 420, 430, 440, 510) isolating the isolated safety area (450), the at least one mobile passage control unit (222, 224, 226, 232, 234, 236, 410, 420, 430, 440, 510) comprising a sensing device (515) configured to provide three-dimensional sensing data relating to the monitored volume, wherein the monitoring system (500) is configured to:
detect, by a mobile passage control unit of the at least one mobile passage control unit (222, 224, 226, 232, 234, 236), a triggering event for determining a position of the mobile passage control unit (222, 224, 226, 232, 234, 236, 410, 420, 430, 440, 510) in the underground work site (100, 300, 400, 550);
obtain, as a response to detecting the triggering event, three-dimensional sensing data relating to the monitored volume by the sensing device (515);
receive the three-dimensional sensing data by the positioning unit (520);
determine, by the positioning unit (520), based on the three-dimensional sensing data and the three-dimensional reference data relating to the monitored volume, the position of the mobile passage control unit (222, 224, 226, 232, 234, 236); -
**characterized in that** the monitoring system (500) is further configured to: provide, by the positioning unit (520), information on the position of the mobile passage control unit (222, 224, 226, 232, 234, 236, 410, 420, 430, 440, 510) to the mobile passage control unit (222, 224, 226, 232, 234, 236), the information on the position comprising a location and orientation of the mobile passage control unit (222, 224, 226, 232, 234, 236); and
inform, by the mobile passage control unit (222, 224, 226, 232, 234, 236), information on the position of the mobile passage control unit (222, 224, 226, 232, 234, 236, 410, 420, 430, 440, 510) to other entities capable of communicating with the mobile passage unit.

2. A monitoring system (500) according to claim 1, wherein the triggering event comprises at least one of the following: receiving a user input, detecting a change in the three-dimensional sensing data that is greater than a pre-determined threshold change, or receiving a command to obtain the scan.

3. A monitoring system (500) according to any previous claim, wherein determining the position of the mobile passage control unit (222, 224, 226, 232, 234, 236, 410, 420, 430, 440, 510) comprises comparing the three-dimensional sensing data with the three-dimensional reference data associated with a coordinate frame of the underground worksite.

4. A monitoring system (500) according to claim 3, wherein the monitoring system (500) is further configured to present the mobile passage control unit (222, 224, 226, 232, 234, 236, 410, 420, 430, 440, 510) on a map based on the location.

5. A monitoring system (500) according to any previous claim, wherein the monitoring system (500) is further configured to:
receive, by the mobile passage control unit (222, 224, 226, 232, 234, 236, 410, 420, 430, 440, 510) from the positioning unit (520), a request to verify the location determined by the positioning unit (520).

6. A monitoring system (500) according to any previous claim, wherein the monitoring system (500) is further configured to:
detect movement by the mobile passage control unit (222, 224, 226, 232, 234, 236);
interpret the movement as an object approaching the monitored volume; and
provide, by the mobile passage control unit (222, 224, 226, 232, 234, 236), an output indicating that the movement has been detected.

7. A monitoring system (500) according to claim 6, wherein the output comprises visible and/or audible output.

8. A monitoring system (500) according to any previous claim, wherein the system comprises a plurality of mobile passage control units (222, 224, 226, 232, 234, 236).

9. A monitoring system (500) according to any previous claim, wherein the three-dimensional sensing data is obtained using at least one of the following: a multi-layer lidar, a three-dimensional radar, a four-dimensional radar, or ultrasonic sensing.

10. A monitoring system (500) according to any previous claim, wherein the system is further configured to determine, by the positioning unit (520), that the mobile passage control unit (222, 224, 226, 232, 234, 236, 410, 420, 430, 440, 510) defines a part of the isolated safety area (450).

11. A monitoring system (500) according to any previous claim, wherein the system is further configured to determine, by the positioning unit (520), the position of the mobile passage control unit (222, 224, 226, 232, 234, 236, 410, 420, 430, 440, 510) in response to detecting that the positioning unit (520) is activated.

12. A monitoring system (500) according to any previous claim, wherein the system further comprises a user interface and the system is configured to visualize successfully isolated areas (450) on the user interface.

13. A monitoring system (500) according to any previous claim, wherein the system is comprised in, or connected to, a safety system of the underground work site (100, 300, 400, 550).

14. A method for a monitoring system (500) configured to monitor a volume of an underground work site (100, 300, 400, 550) comprising an isolated safety area (450), the monitoring system (500) comprising a positioning unit (520) configured to store three-dimensional reference data relating to the monitored volume and at least one mobile passage control unit (222, 224, 226, 232, 234, 236, 410, 420, 430, 440, 510) isolating an isolated safety area (450), the at least one mobile passage control unit (222, 224, 226, 232, 234, 236, 410, 420, 430, 440, 510) comprising a sensing device (515) configured to provide three-dimensional sensing data relating to the monitored volume, wherein the method comprises:
detecting (S1), by a mobile passage control unit of the at least one mobile passage control unit (222, 224, 226, 232, 234, 236), a triggering event for determining a position of the mobile passage control unit (222, 224, 226, 232, 234, 236, 410, 420, 430, 440, 510) in the underground work site (100, 300, 400, 550);
obtaining (S2), as a response to detecting the triggering event, three-dimensional sensing data relating to the monitored volume by the sensing device (515);
receiving (S3) the three-dimensional sensing data by the positioning unit (520);
determining (S4), by the positioning unit (520), based on the three-dimensional sensing data and the three-dimensional reference data relating to the monitored volume, the position of the mobile passage control unit (222, 224, 226, 232, 234, 236); **characterized by**
providing (S5), by the positioning unit (520), information on the position of the mobile passage control unit (222, 224, 226, 232, 234, 236, 410, 420, 430, 440, 510) to the mobile passage control unit (222, 224, 226, 232, 234, 236), the information on the position comprising a location and orientation of the mobile passage control unit (222, 224, 226, 232, 234, 236); and
inform, by the mobile passage control unit (222, 224, 226, 232, 234, 236), information on the position of the mobile passage control unit (222, 224, 226, 232, 234, 236, 410, 420, 430, 440, 510) to other entities capable of communicating with the mobile passage unit.

15. A computer program comprising instructions for causing the monitoring system defined in claim 1 to perform the method defined in claim 14.

## Patentansprüche

1. Überwachungssystem (500) zur Überwachung eines Volumens eines unterirdischen Arbeitsplatzes (100, 300, 400, 550), der einen isolierten Sicherheitsbereich (450) umfasst, wobei das Überwachungssystem (500) eine Positioniereinheit (520), die zum Speichern dreidimensionaler Referenzdaten bezüglich des überwachten Volumens konfiguriert ist, und mindestens eine mobile Durchgangskontrolleinheit (222, 224, 226, 232, 234, 236, 410, 420, 430, 440, 510), die den isolierten Sicherheitsbereich (450) isoliert, umfasst, wobei die mindestens eine mobile Durchgangskontrolleinheit (222, 224, 226, 232, 234, 236, 410, 420, 430, 440, 510) eine Sensorvorrichtung (515) umfasst, die dafür konfiguriert ist, dreidimensionale Erfassungsdaten bezüglich des überwachten Volumens bereitzustellen, wobei das Überwachungssystem (500) zu Folgendem konfiguriert ist:
durch eine mobile Durchgangskontrolleinheit der mindestens einen mobilen Durchgangskontrolleinheit (222, 224, 226, 232, 234, 236) ein auslösendes Ereignis zum Bestimmen einer Position der mobilen Durchgangskontrolleinheit (222, 224, 226, 232, 234, 236, 410, 420, 430, 440, 510) im unterirdischen Arbeitsbereich (100, 300, 400, 550) zu bestimmen;
als Reaktion auf das Erkennen des auslösenden Ereignisses dreidimensionale Erfassungsdaten bezüglich des überwachten Volumens durch die Sensorvorrichtung (515) zu erhalten;
die dreidimensionalen Erfassungsdaten durch die Positioniereinheit (520) zu empfangen;
die Position der mobilen Durchgangskontrolleinheit (222, 224, 226, 232, 234, 236), auf Grundlage der dreidimensionalen Erfassungsdaten und der dreidimensionalen Referenzdaten bezüglich des überwachten Volumens, durch die Positioniereinheit (520) zu bestimmen;-
**dadurch gekennzeichnet, dass** das Überwachungssystem (500) weiter zu Folgendem konfiguriert ist:
durch die Positioniereinheit (520) Informationen über die Position der mobilen Durchgangskontrolleinheit (222, 224, 226, 232, 234, 236, 410, 420, 430, 440, 510) für die mobile Durchgangskontrolleinheit (222, 224, 226, 232, 234, 236) bereitzustellen, wobei die Informationen über die Position einen Standort und eine Ausrichtung der mobilen Durchgangskontrolleinheit (222, 224, 226, 232, 234, 236) umfassen; und
durch die mobile Durchgangskontrolleinheit (222, 224, 226, 232, 234, 236) Informationen über die Position der mobilen Durchgangskontrolleinheit (222, 224, 226, 232, 234, 236, 410, 420, 430, 440, 510) an andere Einheiten mitzuteilen, die in der Lage sind, mit der mobilen Durchgangskontrolleinheit zu kommunizieren.

2. Überwachungssystem (500) nach Anspruch 1, wobei das auslösende Ereignis mindestens eines der folgenden umfasst: Empfangen einer Benutzereingabe, Erkennen einer Änderung der dreidimensionalen Erfassungsdaten, die größer als eine vorher bestimmte Schwellenwertänderung ist, oder Empfangen eines Befehls, die Abtastung zu erhalten.

3. Überwachungssystem (500) nach einem vorstehenden Anspruch, wobei das Bestimmen der Position der mobilen Durchgangskontrolleinheit (222, 224, 226, 232, 234, 236, 410, 420, 430, 440, 510) das Vergleichen der dreidimensionalen Erfassungsdaten mit den dreidimensionalen Referenzdaten, die einem Koordinatensystem des unterirdischen Arbeitsplatzes zugeordnet sind, umfasst.

4. Überwachungssystem (500) nach Anspruch 3, wobei das Überwachungssystem (500) weiter so konfiguriert ist, dass es die mobile Durchgangskontrolleinheit (222, 224, 226, 232, 234, 236, 410, 420, 430, 440, 510) auf einer Karte basierend auf dem Standort darstellt.

5. Überwachungssystem (500) nach einem vorstehenden Anspruch, wobei das Überwachungssystem (500) weiter zu Folgendem konfiguriert ist:
durch die mobile Durchgangskontrolleinheit (222, 224, 226, 232, 234, 236, 410, 420, 430, 440, 510) von der Positioniereinheit (520) eine Anfrage zu empfangen, den von der Positioniereinheit (520) bestimmten Standort zu überprüfen.

6. Überwachungssystem (500) nach einem vorstehenden Anspruch, wobei das Überwachungssystem (500) weiter zu Folgendem konfiguriert ist:
Bewegung durch die mobile Durchgangskontrolleinheit (222, 224, 226, 232, 234, 236) zu erkennen;
die Bewegung als ein Objekts zu interpretieren, das sich an das überwachte Volumen annähert; und
durch die mobile Durchgangskontrolleinheit (222, 224, 226, 232, 234, 236) ein Ausgangssignal bereitzustellen, das anzeigt, dass die Bewegung erkannt worden ist.

7. Überwachungssystem (500) nach Anspruch 6, wobei die Ausgabe eine sichtbare und/oder hörbare Ausgabe umfasst.

8. Überwachungssystem (500) nach einem vorstehenden Anspruch, wobei das System eine Vielzahl von mobilen Durchgangskontrolleinheiten (222, 224, 226, 232, 234, 236) umfasst.

9. Überwachungssystem (500) nach einem vorstehenden Anspruch, wobei die dreidimensionalen Erfassungsdaten unter Verwendung mindestens eines von Folgendem erhalten werden: einem mehrschichtigen Lidar, einem dreidimensionalen Radar, einem vierdimensionalen Radar oder einer Ultraschallmessung.

10. Überwachungssystem (500) nach einem vorstehenden Anspruch, wobei das System weiter so konfiguriert ist, dass es, durch die Positioniereinheit (520), bestimmt, dass die mobile Durchgangskontrolleinheit (222, 224, 226, 232, 234, 236, 410, 420, 430, 440, 510) einen Teil des isolierten Sicherheitsbereichs (450) definiert.

11. Überwachungssystem (500) nach einem vorstehenden Anspruch, wobei das System weiter so konfiguriert ist, dass es, als Reaktion auf ein Erkennen, dass die Positioniereinheit (520) aktiviert ist, durch die Positioniereinheit (520), die Position der mobilen Durchgangskontrolleinheit (222, 224, 226, 232, 234, 236, 410, 420, 430, 440, 510) bestimmt.

12. Überwachungssystem (500) nach einem vorstehenden Anspruch, wobei das System weiter eine Benutzerschnittstelle umfasst und das System so konfiguriert ist, dass es erfolgreich isolierte Bereiche (450) auf der Benutzerschnittstelle visualisiert.

13. Überwachungssystem (500) nach einem vorstehenden Anspruch, wobei das System in einem Sicherheitssystem des unterirdischen Arbeitsplatzes (100, 300, 400, 550) umfasst oder mit diesem verbunden ist.

14. Verfahren für ein Überwachungssystem (500), das dafür konfiguriert ist, ein Volumen eines unterirdischen Arbeitsplatzes (100, 300, 400, 550) zu überwachen, der einen isolierten Sicherheitsbereich (450) umfasst, wobei das Überwachungssystem (500) eine Positioniereinheit (520), die zum Speichern dreidimensionaler Referenzdaten bezüglich des überwachten Volumens konfiguriert ist, und mindestens eine mobile Durchgangskontrolleinheit (222, 224, 226, 232, 234, 236, 410, 420, 430, 440, 510), die einen isolierten Sicherheitsbereich (450) isoliert, umfasst, wobei die mindestens eine mobile Durchgangskontrolleinheit (222, 224, 226, 232, 234, 236, 410, 420, 430, 440, 510) eine Sensorvorrichtung (515) umfasst, die dafür konfiguriert ist, dreidimensionale Erfassungsdaten bezüglich des überwachten Volumens bereitzustellen, wobei das Verfahren Folgendes umfasst:
Erkennen (S1), durch eine mobile Durchgangskontrolleinheit der mindestens einen mobilen Durchgangskontrolleinheit (222, 224, 226, 232, 234, 236), eines auslösenden Ereignisses, um eine Position der mobilen Durchgangskontrolleinheit (222, 224, 226, 232, 234, 236, 410, 420, 430, 440, 510) im unterirdischen Arbeitsplatz (100, 300, 400, 550) zu bestimmen;
Erhalten (S2), als Reaktion auf das auslösende Ereignis, von dreidimensionalen Erfassungsdaten bezüglich des überwachten Volumens durch die Sensorvorrichtung (515);
Empfangen (S3) der dreidimensionalen Erfassungsdaten durch die Positioniereinheit (520);
Bestimmen (S4), durch die Positioniereinheit (520), auf Grundlage der dreidimensionalen Erfassungsdaten und der dreidimensionalen Referenzdaten bezüglich des überwachten Volumens, der Position der mobilen Durchgangskontrolleinheit (222, 224, 226, 232, 234, 236); **gekennzeichnet durch**
Bereitstellen (S5), durch die Positioniereinheit (520), von Informationen über die Position der mobilen Durchgangskontrolleinheit (222, 224, 226, 232, 234, 236, 410, 420, 430, 440, 510) für die mobile Durchgangskontrolleinheit (222, 224, 226, 232, 234, 236), wobei die Informationen über die Position einen Standort und eine Ausrichtung der mobilen Durchgangskontrolleinheit (222, 224, 226, 232, 234, 236) umfassen; und
Mitteilen, durch die mobile Durchgangskontrolleinheit (222, 224, 226, 232, 234, 236), von Informationen über die Position der mobilen Durchgangskontrolleinheit (222, 224, 226, 232, 234, 236, 410, 420, 430, 440, 510) an andere Einheiten, die in der Lage sind, mit der mobilen Durchgangskontrolleinheit zu kommunizieren.

15. Computerprogramm, das Anweisungen umfasst, um zu veranlassen, dass das in Anspruch 1 definierte Überwachungssystem das in Anspruch 14 definierte Verfahren durchführt.

## Revendications

1. Système de surveillance (500) destiné à surveiller un volume d'un chantier souterrain (100, 300, 400, 550) comprenant une zone de sécurité isolée (450), le système de surveillance (500) comprenant une unité de positionnement (520) configurée pour stocker des données de référence tridimensionnelles relatives au volume surveillé et au moins une unité mobile de contrôle de passage (222, 224, 226, 232, 234, 236, 410, 420, 430, 440, 510) isolant la zone de sécurité isolée (450), la au moins une unité mobile de contrôle de passage (222, 224, 226, 232, 234, 236, 410, 420, 430, 440, 510) comprenant un dispositif de détection (515) configuré pour fournir des données de détection tridimensionnelles relatives au volume surveillé, dans lequel le système de surveillance (500) est configuré pour :
détecter, au moyen d'une unité mobile de contrôle de passage de la au moins une unité mobile de contrôle de passage (222, 224, 226, 232, 234, 236), un événement déclencheur pour déterminer une position de l'unité mobile de contrôle de passage (222, 224, 226, 232, 234, 236, 410, 420, 430, 440, 510) sur le chantier souterrain (100, 300, 400, 550) ;
obtenir, en réponse à la détection de l'événement déclencheur, des données de détection tridimensionnelles relatives au volume surveillé par le dispositif de détection (515) ;
recevoir les données de détection tridimensionnelles au moyen de l'unité de positionnement (520) ;
déterminer, au moyen de l'unité de positionnement (520), sur la base des données de détection tridimensionnelles et des données de référence tridimensionnelles relatives au volume surveillé, la position de l'unité mobile de contrôle de passage (222, 224, 226, 232, 234, 236) ;
**caractérisé en ce que** le système de surveillance (500) est en outre configuré pour :
fournir, au moyen de l'unité de positionnement (520), des informations sur la position de l'unité mobile de contrôle de passage (222, 224, 226, 232, 234, 236, 410, 420, 430, 440, 510) à l'unité mobile de contrôle de passage (222, 224, 226, 232, 234, 236), les informations sur la position comprenant un emplacement et une orientation de l'unité mobile de contrôle de passage (222, 224, 226, 232, 234, 236) ; et
délivrer, au moyen de l'unité mobile de contrôle de passage (222, 224, 226, 232, 234, 236), des informations sur la position de l'unité mobile de contrôle de passage (222, 224, 226, 232, 234, 236, 410, 420, 430, 440, 510) à d'autres entités capables de communiquer avec l'unité mobile de passage.

2. Système de surveillance (500) selon la revendication 1, dans lequel l'événement déclencheur comprend au moins une parmi : la réception d'une entrée utilisateur, la détection d'un changement dans les données de détection tridimensionnelles qui est supérieur à un changement de seuil prédéterminé, ou la réception d'une commande pour obtenir le balayage.

3. Système de surveillance (500) selon une quelconque revendication précédente, dans lequel la détermination de la position de l'unité mobile de contrôle de passage (222, 224, 226, 232, 234, 236, 410, 420, 430, 440, 510) comprend la comparaison des données de détection tridimensionnelles avec les données de référence tridimensionnelles associées à un système de coordonnées du chantier souterrain.

4. Système de surveillance (500) selon la revendication 3, dans lequel le système de surveillance (500) est en outre configuré pour présenter l'unité mobile de contrôle de passage (222, 224, 226, 232, 234, 236, 410, 420, 430, 440, 510) sur une carte sur la base de l'emplacement.

5. Système de surveillance (500) selon une quelconque revendication précédente, dans lequel le système de surveillance (500) est en outre configuré pour :
recevoir, au moyen de l'unité mobile de contrôle de passage (222, 224, 226, 232, 234, 236, 410, 420, 430, 440, 510), à partir de l'unité de positionnement (520), une demande de vérification de l'emplacement déterminé par l'unité de positionnement (520).

6. Système de surveillance (500) selon une quelconque revendication précédente, dans lequel le système de surveillance (500) est en outre configuré pour :
détecter un mouvement au moyen de l'unité mobile de contrôle de passage (222, 224, 226, 232, 234, 236) ;
interpréter le mouvement comme un objet s'approchant du volume surveillé ; et
fournir, au moyen de l'unité mobile de contrôle de passage (222, 224, 226, 232, 234, 236), une sortie indiquant que le mouvement a été détecté.

7. Système de surveillance (500) selon la revendication 6, dans lequel la sortie comprend une sortie visible et/ou audible.

8. Système de surveillance (500) selon une quelconque revendication précédente, dans lequel le système comprend une pluralité d'unités mobiles de contrôle de passage (222, 224, 226, 232, 234, 236).

9. Système de surveillance (500) selon une quelconque revendication précédente, dans lequel les données de détection tridimensionnelles sont obtenues à l'aide d'au moins un parmi : un lidar multicouche, un radar tridimensionnel, un radar quadridimensionnel ou une détection ultrasonore.

10. Système de surveillance (500) selon une quelconque revendication précédente, dans lequel le système est en outre configuré pour déterminer, au moyen de l'unité de positionnement (520), que l'unité mobile de contrôle de passage (222, 224, 226, 232, 234, 236, 410, 420, 430, 440, 510) définit une partie de la zone de sécurité isolée (450).

11. Système de surveillance (500) selon une quelconque revendication précédente, dans lequel le système est en outre configuré pour déterminer, au moyen de l'unité de positionnement (520), la position de l'unité mobile de contrôle de passage (222, 224, 226, 232, 234, 236, 410, 420, 430, 440, 510) en réponse à la détection que l'unité de positionnement (520) est activée.

12. Système de surveillance (500) selon une quelconque revendication précédente, dans lequel le système comprend en outre une interface utilisateur et le système est configuré pour visualiser des zones isolées avec succès (450) sur l'interface utilisateur.

13. Système de surveillance (500) selon une quelconque revendication précédente, dans lequel le système est compris dans, ou connecté à, un système de sécurité du chantier souterrain (100, 300, 400, 550).

14. Procédé pour un système de surveillance (500) configuré pour surveiller un volume d'un chantier souterrain (100, 300, 400, 550) comprenant une zone de sécurité isolée (450), le système de surveillance (500) comprenant une unité de positionnement (520) configurée pour stocker des données de référence tridimensionnelles relatives au volume surveillé et au moins une unité mobile de contrôle de passage (222, 224, 226, 232, 234, 236, 410, 420, 430, 440, 510) isolant une zone de sécurité isolée (450), la au moins une unité mobile de contrôle de passage (222, 224, 226, 232, 234, 236, 410, 420, 430, 440, 510) comprenant un dispositif de détection (515) configuré pour fournir des données de détection tridimensionnelles relatives au volume surveillé, dans lequel le procédé comprend :
la détection (S1), par une unité mobile de contrôle de passage de la au moins une unité mobile de contrôle de passage (222, 224, 226, 232, 234, 236), d'un événement déclencheur pour déterminer une position de l'unité mobile de contrôle de passage (222, 224, 226, 232, 234, 236, 410, 420, 430, 440, 510) sur le chantier souterrain (100, 300, 400, 550) ;
l'obtention (S2), en réponse à la détection de l'événement déclencheur, de données de détection tridimensionnelles relatives au volume surveillé par le dispositif de détection (515) ;
la réception (S3) des données de détection tridimensionnelles par l'unité de positionnement (520) ;
la détermination (S4), par l'unité de positionnement (520), sur la base des données de détection tridimensionnelles et des données de référence tridimensionnelles relatives au volume surveillé, de la position de l'unité mobile de contrôle de passage (222, 224, 226, 232, 234, 236) ; **caractérisé par**
la fourniture (S5), par l'unité de positionnement (520), d'informations sur la position de l'unité mobile de contrôle de passage (222, 224, 226, 232, 234, 236, 410, 420, 430, 440, 510) à l'unité mobile de contrôle de passage (222, 224, 226, 232, 234, 236), les informations sur la position comprenant un emplacement et une orientation de l'unité mobile de contrôle de passage (222, 224, 226, 232, 234, 236) ; et
la délivrance, par l'unité mobile de contrôle de passage (222, 224, 226, 232, 234, 236), d'informations sur la position de l'unité mobile de contrôle de passage (222, 224, 226, 232, 234, 236, 410, 420, 430, 440, 510) à d'autres entités capables de communiquer avec l'unité mobile de passage.

15. Programme informatique comprenant des instructions pour amener le système de surveillance défini dans la revendication 1 à exécuter le procédé défini dans la revendication 14.
